# EUROPEAN PATENT SPECIFICATION

(11) **EP 1 910 658 B1**
(45) Date of publication and mention of the grant of the patent: **23.02.2011**
(21) Application number: 06765171.1
(22) Date of filing: 31.07.2006
(51) Int. Cl.: F02D 41/34, F02D 41/18, F02D 1/06, F02D 1/08

(54) **FUEL INJECTION UNIT**
KRAFTSTOFFEINSPRITZEINHEIT
UNITÉ D INJECTION DE CARBURANT

(30) Priority: 05.08.2005 GB 0516235; 28.10.2005 GB 0522066; 28.10.2005 GB 0522068
(43) Date of publication of application: 16.04.2008
(60) Divisional application: 10015667.8
(73) Proprietor: Scion-Sprays Limited, Norfolk NR14 8FB (GB)
(72) Inventor: ALLEN, Jeffrey, Attleborough Norfolk NR17 2DQ (GB)
(74) Representative: Pluckrose, Anthony William
(86) International application number: PCT/GB2006/002858
(87) International publication number: WO 2007/017630

(56) References cited:
- EP-A2- 1 197 657
- EP-A2- 1 394 398
- US-A- 4 930 482
- US-A- 5 092 301
- US-A- 5 261 369
- US-A1- 2003 061 870
- US-A1- 2005 039 526

## Description

This invention relates to a fuel injection unit for an internal combustion engine.

Most internal combustion engines in automobiles currently use fuel injection systems to supply fuel to the combustion chambers of the engine. Fuel injection systems have replaced the earlier technology of carburettors because they give better control of the delivery of fuel and enable the engine to meet emission legislation targets as well as improving overall efficiency.

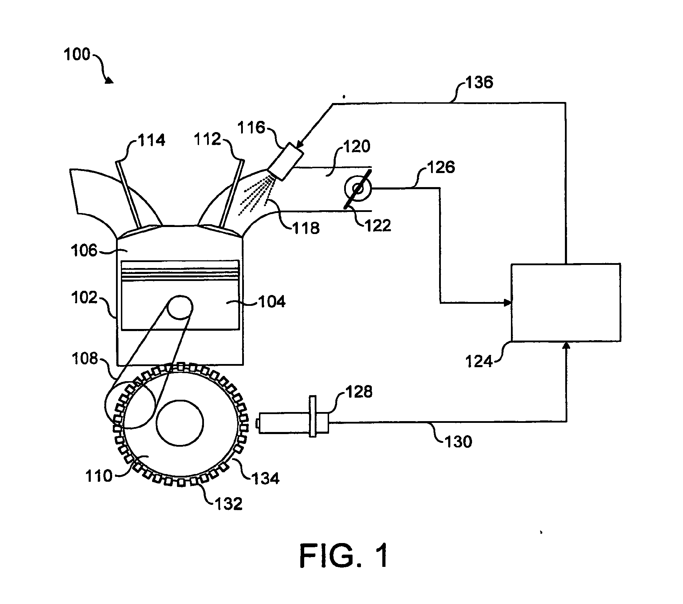

It is important that the fuel injection system delivers an appropriate amount of fuel at an appropriate time. Inappropriate delivery of the fuel may lead to a reduction in the output power of the engine and a wastage of fuel. Therefore, to appropriately inject the fuel into the intake charge air, fuel injection systems make use of an engine control unit, an example of which is illustrated schematically in Figure 1 of the accompanying drawings.

Figure 1 illustrates a conventional internal combustion engine 100 comprising a cylinder 102 in which reciprocates a piston 104 with the piston 104 and the cylinder 102 defining between them a combustion chamber 106. The piston 104 is connected by a connecting rod 108 to a crankshaft 110. The crankshaft 110 drives a camshaft (not shown) which in turn drives an inlet valve 112 and an exhaust valve 114. The inlet valve 112 and the exhaust value 114 are driven in timed relationship to the movement of the piston 104 in the cylinder 102, with return springs (not shown) biasing the valves 112, 114 back into their valve seats.

The fuel injection system of the engine 100 comprises a fuel injector 116 arranged to deliver fuel 118 into an inlet passage 120 upstream of the inlet valve 112. A throttle valve 122 is placed in the inlet passage 120 to control the flow of charge air into the inlet passage 120 and the combustion chamber 106.

An engine control unit 124 controls the time at which the fuel 118 is injected into the charge air present in the inlet passage 120 and also controls the quantity of fuel 118 that is injected. The engine control unit 124 receives a signal from the throttle valve 122 via a control line 126, the signal indicating the rotational position of the throttle valve 122 and hence the engine load. Additionally, the engine control unit 124 receives a timing signal from a crankshaft sensor 128 (which could be replaced by a camshaft sensor) via a control line 130. The crankshaft sensor 128 is responsive to teeth 132 on the crankshaft 110 and to a gap 134 in the teeth 132. The engine control unit 124 can determine, from the timing signal received from the crankshaft sensor 128, the speed of the engine 100 and the position of the piston 104 within the cylinder 102, this being used to determine the timing of opening and closing of the inlet valve 112. Having regard to the timing signal produced by the crankshaft sensor 128 and the load signal produced by the sensor attached to the throttle valve 122, the engine control unit 124 generates a control signal which is relayed to the injector 116 via a line 136 and controls the operation of the injector 116.

Whilst the sophisticated and highly developed fuel injection systems currently available (as described above) are ideal for use in internal combustion engines in automobiles, there are many other applications for internal combustion engines where such a level of sophistication is not appropriate and too costly. For instance, small single cylinder engines as used for a variety of engine powered gardening devices (such as lawn mowers, hedge trimmers, chain saws, rotovators, lawn aerators, scarifiers and shredders), small generators, mopeds, scooters, etc. are built to very tight cost targets and therefore cannot afford the cost of a sophisticated fuel injection system. To date, such small engines have used traditional cheaper carburettor technology. However, small engines of this type will soon face the same kind of exhaust gas emission legislation as automobile engines and so must be modified to meet the emission targets. Therefore, a cheap and simple system of fuel injection is required for such small engines.

US2005/039526 discloses a fuel injection system in which the signal of a pressure sensor is used as the sole means of determining timing for fuel injection. However, the system described is traditional in nature and (like the Figure 1 embodiment) separates the controller, sensor and injector.

According to the invention, there is provided a fuel injection unit comprising:
a pressure sensor operable to detect a pressure of the charge air;
an electronic controller responsive to the pressure detected by the pressure sensor, the controller being operable to detect a change in the pressure detected by the pressure sensor and to control timing of injection of fuel in dependence upon the time at which one or more of the detected pressure changes occurs; and
a fuel injector controlled by the control unit; wherein:
the pressure sensor, the controller and the fuel injector are formed as a unitary fuel injection controller; and
the timing of the fuel injection is controlled solely in dependence upon the time at which the pressure sensor detects a pressure change.

Preferably, the fuel injection unit comprises additionally:
a position sensor for sensing position of a throttle valve; and
the electronic controller uses the throttle position detected by the position sensor in determining an amount of fuel to be delivered in an engine cycle; and
the pressure sensor, the controller, the fuel injector and the position sensor are assembled together as the single unitary fuel injection unit in the casing so as to be attachable to a throttle body in an easily replaceable manner.

Preferably, the fuel injection unit comprises additionally:
an oxygen sensor for sensing oxygen content in exhaust gas recycled for mixing with the charge air;
the electronic controller uses the oxygen content detected by the oxygen sensor in determining the amount of fuel to be delivered by the fluid injector in an engine cycle; and
the pressure sensor, the controller, the fuel injector and the oxygen sensor are assembled together as the unitary fuel injection unit in the casing so as to be attachable to a throttle body in an easily replaceable manner.

Preferably, the fuel injection unit comprises additionally:
a motor connectable to a throttle valve and controlled by the controller, whereby the controller can control throttle valve position; and
the pressure sensor, the controller, the fuel injector and the motor are assembled together as the unitary fuel injector unit in the casing so as to be attachable to a throttle body in an easily replaceable manner.

Internal combustion engines that make use of embodiments of the invention can do away with complicated, heavy and expensive fuel injection timing systems of the type that have been described above with reference to Figure 1. Instead, they may make use of a cheaper and simpler system that has a pressure sensor to detect the pressure of the intake charge air, with changes in the pressure then being detected and interpreted by a controller which uses this information to control the timing of the fuel injectors.

According to a further aspect of the invention, there is provided an internal combustion engine comprising a fuel injection unit according to the first aspect of the invention.

According to an additional aspect of the invention, there is provided an engine powered device comprising an internal combustion engine according to the second aspect of the invention.

The engine powered device may be an automobile. Alternatively, the engine powered device may be a gardening device, such as a lawn mower, a hedge trimmer, a chain saw, a rotovator, a lawn aerator, a scarifier and a shredder.

Further respective aspects and features of the invention are defined in the appended claims.

Embodiments of the invention will now be described with reference to the accompanying drawings, in which:
Figure 1 schematically illustrates a conventional internal combustion engine;
Figure 2 schematically illustrates an internal combustion engine having a fuel injection unit according to a first embodiment of the invention;
Figure 3A is a graph illustrating how the pressure of the air in an engine inlet passage changes when the engine is at full load;
Figure 3B is a graph illustrating how the pressure of the air in an engine inlet passage changes when the engine is partially loaded;
Figure 3C is a graph illustrating how the pressure of the air in an engine inlet passage changes when the engine is idle;
Figure 4 schematically illustrates an electronic controller suitable for use in an engine control unit of the present invention;
Figure 5 is a schematic flowchart of the operation of the engine control unit illustrated in Figure 2;
Figure 6 schematically illustrates an internal combustion engine having a fuel injection unit according to a second embodiment of the invention;
Figure 7 schematically illustrates a fuel injector for use in a fuel injection unit of the invention;
Figure 8 schematically illustrates an internal combustion engine having a fuel injection unit according to a third embodiment of the invention;
Figure 9 schematically illustrates an internal combustion engine having a fuel injection unit according to a fourth embodiment of the invention;
Figure 10 schematically illustrates an internal combustion engine having a fuel injection unit according to a fifth embodiment of the invention;
Figure 11 schematically illustrates an internal combustion engine having a fuel injection unit according to a sixth embodiment of the invention;
Figure 12 is an illustration of a cooling circuit of the fuel injection unit of Figure 11;
Figure 12a is an illustration of a modification of the cooling circuit of Figure 12;
Figure 13 schematically illustrates an internal combustion engine having a fuel injection unit of Figure 13 in an activated state; and
Figure 14 illustrates an internal combustion engine having a fuel injection unit according to an eighth embodiment of the invention.

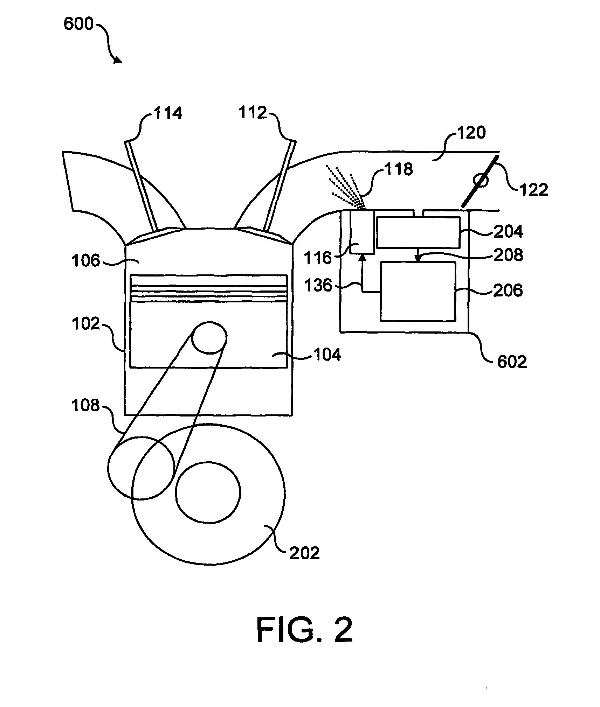

Figure 2 schematically illustrates an internal combustion engine 600 having a fuel injection unit 602. The internal combustion engine 600 is similar to the internal combustion engine 100 shown in Figure 1. Components of the engine 600 that are the same as components of the engine 100 are given the same reference numeral and, for clarity, a description of them will not be repeated.

The engine 600 has a crankshaft 202, which is similar to the crankshaft 110 shown in Figure 1, except that the crankshaft 202 does not have the teeth 132 and hence does not have the gap 134.

The engine 600 also has a pressure sensor 204 for detecting the pressure of the air within the inlet passage 120. The pressure sensor 204 supplies an electronic controller 206 with a pressure signal via a control line 208.

The electronic controller 206 determines, from the pressure signal received from the pressure sensor 204: (i) the engine load; (ii) the engine speed; and (iii) the timing of the opening and/or closing of the inlet valve 112. This will be described in more detail later. In addition, as before, the electronic controller 206 generates a control signal which is relayed to the injector 116 via the line 136 and controls operation of the injector 116.

In the engine 100 shown in Figure 1, the engine control unit 124 uses the signal from the crankshaft sensor 128 to determine the engine speed and the timing of the opening and closing of the inlet valve 112. Therefore, it will be appreciated that, as the electronic controller 206 determines both the engine speed and the timing of the opening and closing of the inlet valve 112 from the pressure signal received from the pressure sensor 204, the engine 200 does not require the crankshaft sensor 128 of the engine 100 (nor the control line 130). This is the reason that the crankshaft 202 of the engine 200 is more simply formed than the crankshaft 110 of the engine 100, i.e. the crankshaft 200 does not need to be provided with the teeth 132 and the gap 134, these being provided to the crankshaft 110 to enable the crankshaft sensor 128 to perform its task.

Furthermore, in the engine 100 shown in Figure 1, the engine control unit 128 uses the load signal from the sensor attached to the throttle valve 122 to determine the engine load. Therefore, it will be appreciated that, as the electronic controller 206 determines the engine load from the pressure signal received from the pressure sensor 204, the engine 600 does not require the sensor attached to the throttle valve 122 (nor the control line 126).

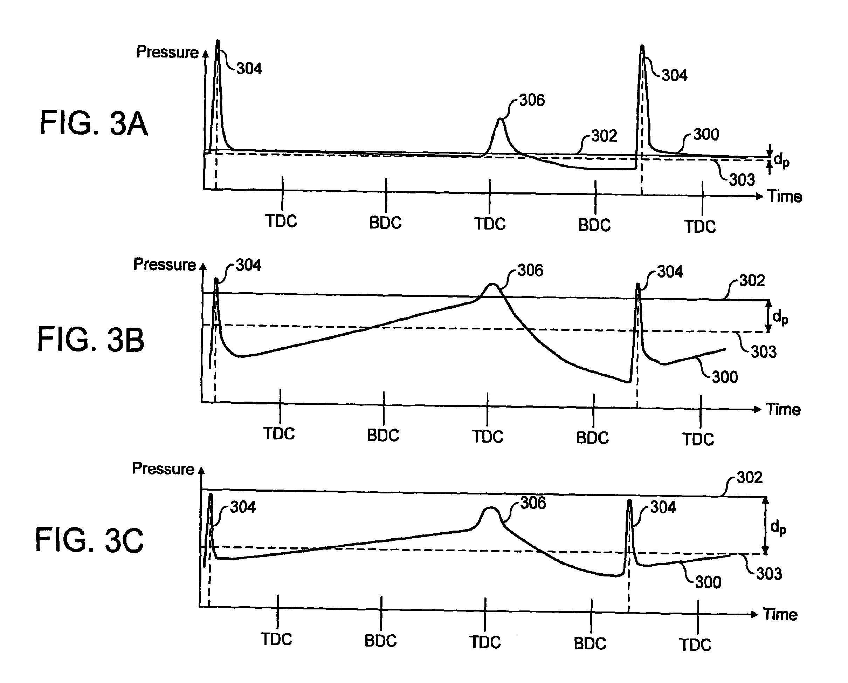

Figure 3A is a graph illustrating how the pressure 300 of the air in the inlet passage 120, as detected by the pressure sensor 204, changes as the piston 104 cycles between the top-dead-centre (TDC) position within the cylinder 102 (at which the piston 104 is furthest from the crankshaft 202) and the bottom-dead-centre (BDC) position within the cylinder 102 (at which the piston 104 is closest to the crankshaft 202). As a reference pressure, atmospheric pressure 302 is represented by a horizontal straight line on the graph. The average detected pressure 303 over an engine cycle is represented by a horizontal dashed line on the graph, the difference between atmospheric pressure 302 and the average detected pressure 303 being dₚ.

As can be seen, there are sharp peaks 304 in the pressure detected by the pressure sensor 204. Each of the sharp peaks 304 corresponds to the closing of the inlet valve 112 during the engine cycle. Closing the inlet valve 112 causes a "pressure pulse" within the inlet passage 120. This pressure pulse corresponds to the sharp increase of the peak 304. However, this pressure pulse effect soon dies away and the pressure of the air within the inlet passage 120 returns to approximately atmospheric pressure 302. This corresponds to the sharp decrease of the peak 304.

Additionally, there is another peak 306 in the pressure detected by the pressure sensor 204. This peak 306 results from the opening of the inlet.valve 112. The arrangement of the crankshaft 202 and the camshaft causes the inlet valve 112 to open as the piston 104 is still rising within the cylinder 102. The peak 306 results from the exhaust gas in the cylinder 102 being forced into the inlet passage 120 by the higher pressure during the exhaust stroke.

As the piston 104 then moves down within cylinder 102 and draws in the air and fuel mixture into the cylinder 102, the movement of the air in the inlet passage 120 causes a drop in the pressure of the air within the inlet passage 120.

Figure 3A is a graph for when the engine 200 is at full load. Figures 3B and 3C are similar to the graph of Figure 3A, except that the graph of Figure 3B is for when the engine 200 is partially loaded and the graph of Figure 3C is for when the engine 200 is idle. As can be seen, the pressure changes detected by the pressure sensor 204 during an engine cycle are dependent upon the engine load. In particular, when the engine 200 is fully loaded, the throttle valve 122 is fully open, meaning that the pressure of the air in the inlet passage 120 can quickly return to atmospheric pressure 302 following the closure of the inlet valve 112. However, when the engine 200 is idle (or partially loaded), the throttle valve 122 reduces the rate at which air can enter and leave the inlet passage 120, resulting in a slower return of the pressure of the air within the inlet passage 120 to atmospheric pressure 302. This results in a larger difference dₚ at lower engine loads. However, the peaks 304 and 306 occurring in response to the closure and opening of the inlet valve 112 are still clearly discernable in each of the graphs of Figures 3A-C.

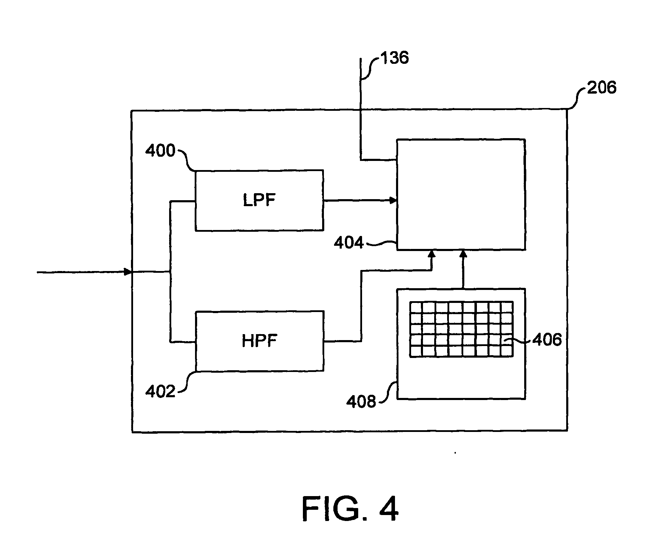

Figure 4 schematically illustrates the electronic controller 206. The pressure signal from the pressure sensor 204 representing the pressure of the air in the inlet passage 120 is received by the engine control unit 206 via the control line 208. The pressure signal is then supplied to a low pass filter 400 and a high pass filter 402. The outputs of the low pass filter 400 and the high pass filter 402 are supplied separately to a processor 404. The processor 404 has access to a look-up-table 406 stored in a memory 408. The processor 404 uses the output of the low pass filter402, the output of the high pass filter 404 and the look-up-table 406 to generate a control signal to be supplied to the injector 116 via the control line 136.

As will be described, the processor unit 404 uses the low pass filtered pressure signal to determine the load of the engine 200. The processor unit 404 also uses the high pass filtered pressure signal to determine the speed of the engine 200 and the timing of the opening and closing of the inlet valve 112.

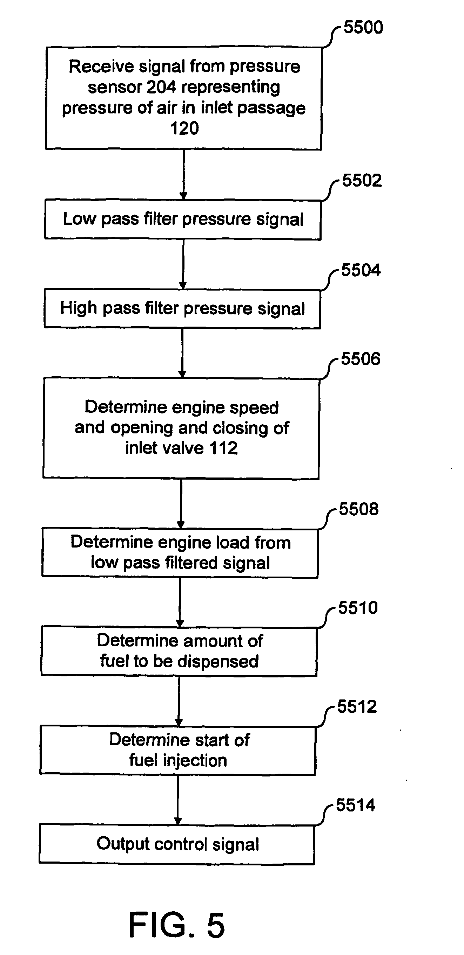

Figure 5 is a flowchart of the operation of the engine control unit 206 illustrated in Figure 4.

At a step S500, the engine control unit 206 receives the pressure signal from the pressure sensor 204, the pressure signal representing the pressure of the air within the inlet passage 120.

At a step S502, the low pass filter unit 400 low pass filters the input pressure signal and outputs a low pass filtered pressure signal to the processor unit 404.

At a step S504, the high pass filter unit 402 high pass filters the input pressure signal and outputs a high pass filtered pressure signal to the processor unit 404.

At a step S506, the electronic processor 404 uses the high pass filtered pressure signal output by the high pass filter 402 to determine the timing of the peaks 304 in the pressure signal received from the pressure sensor 204. This may be performed in any conventional manner, such as detecting the occurrence of a peak 304 when the magnitude of the high pass filtered pressure signal exceeds a threshold value. It will be appreciated, therefore, that the particular high pass filter used is chosen such that the peaks 304 can be easily identified.

The time between successive peaks 304 that represent the closing of the inlet valve 112 is directly related to the speed of the engine 200: namely, the inlet valve 112 opens and closes once for every two revolutions of the crankshaft 202 (i.e. for one engine cycle). The processor unit 404 therefore calculates the engine speed from the time between successive peaks 304 that represent closing the inlet valve 112 (or the time between successive peak 306 that represent opening the inlet valve 112). It is preferred to use peaks 304 since they are higher and sharper than peaks 306 and therefore give the clearest signal for engine speed and timing reference. However, the peaks 306 could be alternatively or additionally used.

Next, at a step S508, the load of the engine is determined from the detected pressure. The processor unit 404 determines the average detected pressure 303 over an entire engine cycle (such as between successive closures of the inlet valve 112). The electronic controller 404 uses the low pass filtered pressure signal from the low pass filter unit 402 to determine the average detected pressure 303 so that the effects of the peaks 304 and 306 in the detected pressure are minimized. The difference dₚ between the average detected pressure 303 and atmospheric pressure 302 is used as an indicator of the engine load. The smaller the value of this pressure difference dₚ, the higher the engine load.

At a step S510, the electronic controller 404 references the look-up-table 406 to determine how much fuel 118 should be dispensed to mix with the air in the inlet passage 120. The look-up-table 406 will be described in more detail later.

At a step S512, the electronic controller 404 determines when fuel injection should begin for the current engine cycle, i.e. the start of dispensing of fuel in the current engine cycle. In particular, the start of the fuel injection will occur at a predetermined time relative to the opening of the inlet valve 112. The electronic controller 404 estimates when the inlet valve will open in the current engine cycle based on the time during the previous engine cycle at which the inlet valve 112 opened. For example, the electronic controller 404 calculates the time between the closing of the inlet valve 112 and the opening of the inlet valve 112 in the previous engine cycle and assumes that this time period will be the same for the current engine cycle. When the electronic controller 404 detects the closure of the inlet valve 112 for the current engine cycle, it can then simply work out when the inlet valve 112 is expected to open next. Alternatively, for an engine designed to run at a constant engine speed, the electronic controller 404 simply needs to know the time during the previous engine cycle at which the inlet valve 112 opened, from which it can then calculate the time at which the inlet valve 112 is expected to open during the current engine cycle.

Finally, at a step S514, the electronic controller 404 generates an appropriate control signal for the injector 116 and outputs the control signal on the line 136.

The look-up-table 406 stores, for a given range of engine loads and a given range of engine speeds, a corresponding indication of the amount of fuel 118 that is to be injected into the air in the inlet passage 120. Note that the range of engine speeds may be represented by a range of the time between successive peaks 304 (or 306) in the detected pressure.

In the embodiments described in detail in this specification, the indications of the amount of fuel are indications of the number of discrete injections of a fixed quantity of the fuel 118. However, if a pulse width modulated injector were to be used then the amount of fuel would be determined by the length of time of activation of the injector. In either case, the length of the time during which the fuel 118 and the air are combined is defined in the look-up-table 406 (either by the pulse width of a single fuel injection or by the number of discrete injections of a fixed fuel quantity). This then defines the amount of fuel 118 to be combined with the air in the inlet passage 120 during the current engine cycle.

It will be appreciated that the electronic controller 206 may store a computer program which the electronic processor 404 executes in order to perform the timing control of the injector 116. The computer program may be stored together with the look-up-table 406 in the memory 408.

The electronic controller 206 may store a reference value for atmospheric pressure 302, so that it can calculate the pressure difference dₚ. Alternatively, the electronic controller 206 may receive an input from another pressure sensor (not shown) that detects the current value of atmospheric pressure 302. This pressure sensor could be the pressure sensor 204, with atmospheric pressure 302 being detected prior to starting the engine 200.

It will be appreciated that the electronic controller 206 need not make use of a low pass filter unit 400 to determine the average pressure 303. For example, the processor 404 could simply average the pressure signal received directly from the pressure sensor 204 over an engine cycle.

Furthermore, the fuel injection unit 206 need not make use of a high pass filter 402 to determine the peaks 304 and 306 in the pressure detected by the pressure sensor 204. For example, the processor 404 could simply search for local maxima in the pressure signal received directly from the pressure sensor 204. Additionally, the processor 404 could perform standard signal processing techniques to determine the periodicity of the pressure signal received directly from the pressure sensor 204.

In the engine 600 of Figure 2 the fuel injector 116, the pressure sensor 204 and the engine control unit 206 are formed as a unitary fuel injection unit 602.

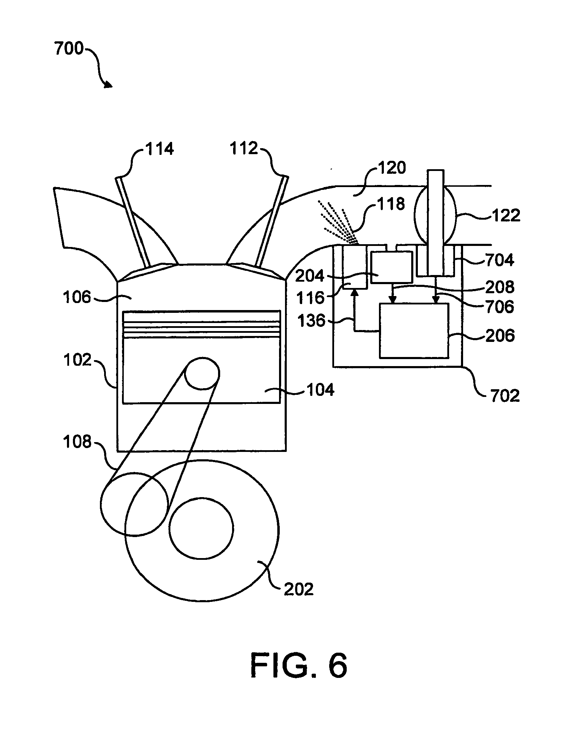

The fuel injection unit 602 could be arranged so as to not estimate the engine load (and therefore not have the low pass filter unit 400). In this case, the electronic controller 206 receives an input signal indicative of the engine load from an alternative source. Such an alternative embodiment is illustrated schematically in Figure 6, which illustrates an internal combustion engine 700 having a unitary fuel injection unit 702 that is the same as the unitary fuel injection controller 602 of the engine 600, except that it comprises a potentiometer 704 coupled to the throttle valve 122. The potentiometer 704 provides a control signal, indicative of the rotational position of the throttle valve and hence indicative of the engine load, to the electronic controller 206 via a control line 706. The electronic controller 206 also receives the detected pressure signal from the pressure sensor 204 and uses this (as described above) to determine the speed of the engine 700 and the timing of the opening and closing of the inlet valve 112. The electronic controller 206 then controls the injector 116 in the same way as has been described above.

It will be appreciated that, in an internal combustion engine having more than one cylinder 102, a pressure sensor 204 may be provided at the inlet passage 120 of each of the cylinders 102, with a single fuel injection unit 206 receiving a pressure signal from each of the pressure sensors 204 and outputting a control signal to the corresponding injectors 116 as appropriate using per-cylinder based timing calculations.

Alternatively, in an internal combustion engine having more than one cylinder 102, a single pressure sensor 204 may be provided to detect pressure changes from more than one of the cylinders 102. The electronic controller 206 then detects the opening and closing of multiple inlet valves 112. In the case in which a single injector 116 is used for all of the cylinders 102, then the electronic controller 206 controls the injector 116 in a manner similar to that which has been described above, except that during one complete engine cycle, the injector 116 will be activated for more than one fuel injection period. In the case in which each cylinder 102 has its own injector 116, then the electronic controller 206 needs to know which of the multiple inlet valves 112 is opening and closing so that it can control the corresponding injector 116 at the appropriate time. The electronic controller 206 can determine this if the timing order for opening and/or closing the inlet valves 112 is arranged to have a distinctive timing characteristic that is detectable from the pressure signal generated by the pressure sensor 204 and received by the electronic controller 206.

It is often the case that an internal combustion engine is only run at a constant speed but with a varying load. Examples of this include internal combustion engines used in gardening equipment (such as lawn mowers, rotovators, hedge trimmers, chain saws, lawn aerators, scarifiers, shredders, etc.). As such, the look-up-table 406 can be simplified such that it stores, for a given range of engine loads (but not engine speeds), an indication of the amount of the fuel 118 that is to be injected into the air in the inlet passage 120. As has been described above, this indication may be a number of discrete injections of a fixed quantity of the fuel 118 or the length of time (pulse width) that the fuel injector 116 should be activated for, given the specified engine load. In either case, the length of the combination interval during which the fuel 118 and the air are combined is defined, either by the number of discrete injections of a fixed fuel quantity or by the pulse width of a single fuel injection.

The gas present in the inlet passage 120 will, in many internal combustion engines, be air. However, it will be appreciated that a gas other than air may be used within the internal combustion engine for combination with the fuel 116. Any gas which, when combined with the fuel 116, is suitable for combustion within the combustion chamber 106 may be used.

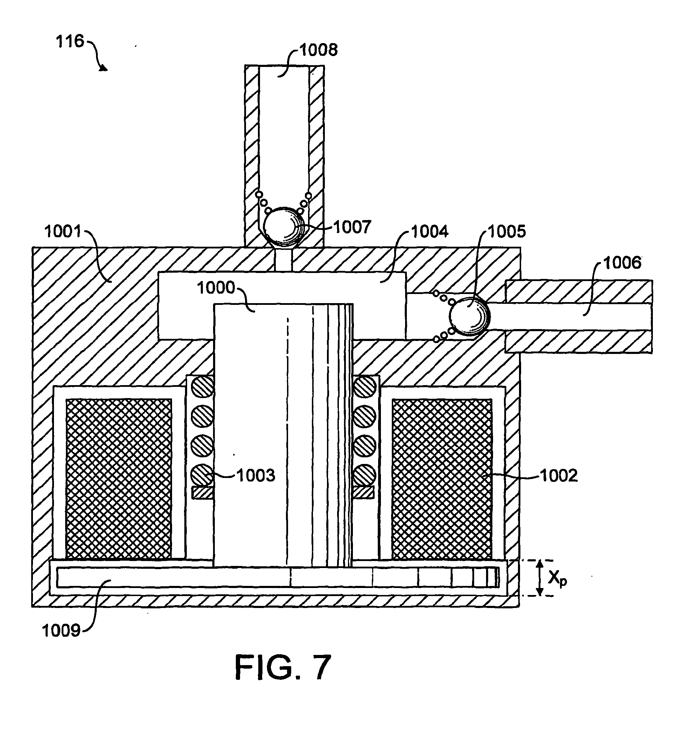

Figure 7 shows an embodiment of the injector 116. It comprises a piston 1000 slideable in a housing 1001. The piston 1000 is acted upon by a solenoid 1002 and by a biasing valve spring 1003. The piston is moveable to draw fuel into and dispense fuel from a fuel chamber 1004. A one-way inlet valve 1005 allows fuel to flow into the fuel chamber 1004 from a fuel inlet 1006, while preventing flow of fuel out of the fuel chamber 1004 to the fuel inlet 1006. A one-way sprung-loaded outlet valve 1007 allows fuel to be dispensed from the fuel chamber 1004 to a fuel outlet 1008, but prevents fuel being drawn back into the fuel chamber 1004 from the fuel outlet 1008. the piston 1000 has an end plate 1009 which extends radially out from the piston 1000 and extends over an end face of the solenoid 1002.

In the operation of the fuel injector 116 the activation of the solenoid 1002 draw the end plate 1009 into abutment with the end face of the solenoid 1002 and the piston 1000 moves against the biasing force of the spring 1003 to displace from the fuel chamber 1004 fuel via the outlet valve 1007 to the fuel outlet 1008. Then, when the solenoid 1002 is de-energised the biasing spring 1003 forces the piston 1000 to move to draw fuel into the fuel chamber 1004 via the inlet valve 1005. The piston 1000 has a defined piston stroke Xₚ This piston stroke is defined by setting the travel of the piston between two end stops. By setting a definite piston travel the amount of fuel dispensed in each dispensing operation of the fuel injector 116 can be set at a set value. Thus, whenever the solenoid 1002 is operated then the fuel injector 116 dispenses a set amount of fuel. This means that in each engine cycle the amount of fuel dispensed by the fuel injector 116 can be controlled by controlling the number of times that the solenoid 1002 is activated during the engine cycle. Unlike pulse width modulated injectors, the amount of fuel delivered by the fuel injector is insensitive to pressure variations in the intake passage 120.

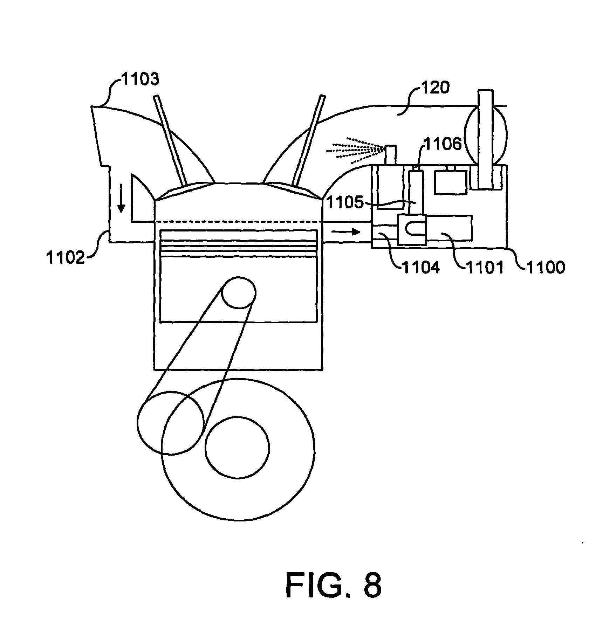

Figure 8 shows a further embodiment of fuel injection unit 1100. It is identical to the fuel injector 702 previously described, except that the unit 1100 additionally provides exhaust gas recirculation and additionally includes an oxygen sensor 1101. Exhaust gas recirculation is provided by a passage 1102 connected to the exhaust runner 1103 and leading exhaust gas from the exhaust runner 1103 via the fuel injection unit 1100 to the inlet passage 1102. For this purpose exhaust gas recirculation passages 1104 and 1105 are provided in the fuel injection unit 1100, the passage 1104 being connected to an inlet for combusted gases and the passage 1105 being connected to an outlet for exhausted gases, the outlet letting the exhaust gases pass into the inlet passage 120. The exhaust gases pass into the inlet passage 120 from the passage 1105 via an exhaust gas flow control orifice 1106, sized to control the total flow of exhaust gas recirculation.

The use of exhaust gas recirculation is well-known to significantly reduce the production of NOₓ emissions in the combustion process. In the embodiment illustrated the direction of the recirculated exhaust gas through the fuel injection unit 1100 allows an oxygen sensor to be located within the fuel injection unit 1100. Usually, oxygen sensors are located in the exhaust system downstream of the exhaust valve. The oxygen sensor 1101 allows the electronic controller 206 to have a feedback signal indicating the efficiency of the combustion process and allowing the controller 206 to optimise the air/fuel ratio and hence optimise the efficiency of a catalytic converter connected to the engine and optimise fuel consumption.

The arrangement of Figure 8 is advantageous since it allows the oxygen sensor to be directly fitted within the single fuel injection unit, thus eliminating the need for separate wires and connectors all of which significantly add to the cost in the engine.

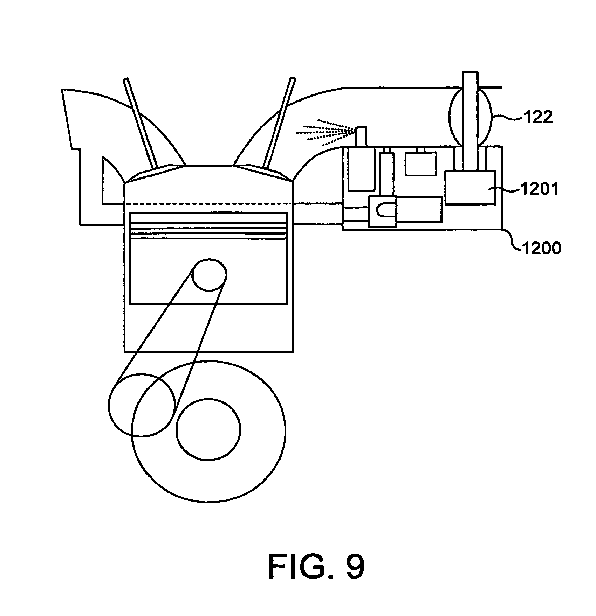

Figure 9 shows a modification of the Figure 8 embodiment in which the fuel injection unit 1200 additionally includes a stepper motor 1201 (in all other respects it is the same as the fuel injection unit 1100 and identical components and functions will not be described). The stepper motor 1201 controls the position of the blade of the throttle 122. In many cases, (e.g.in lawnmowers) small internal combustion engines have throttles controlled by a mechanical governor which mechanically opens and closes the throttle blades. As the fuel injection unit 1200 has sensors which enable it to determine the speed and timing of the engine in order to time the fuel injection and control the amount of fuelling, it is also possible to program the electronic controller to use the information to drive throttle blade position. Thus, the electronic controller will control the stepper motor 1201 (or any equivalent drive motor which is suitable).

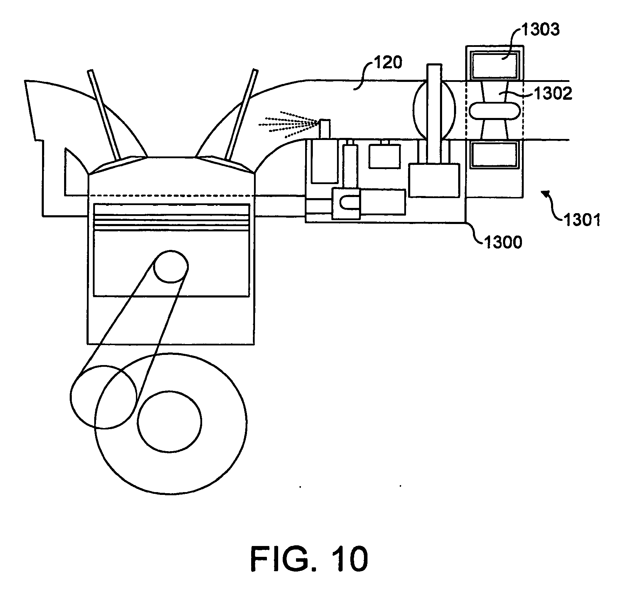

A modification of the fuel injection unit 1200 is shown in Figure 10 as fuel injector unit 1300. The fuel injection unit 1300 is identical to the unit 1200 except for the way that it is powered. The fuel injection unit previously described will either by powered by internal batteries, or more likely, by a combination of battery and generator or alternator used for the internal combustion engine as a whole.

In Figure 10 an electrical generator 1301 is shown comprising a turbine rotor 1302 surrounded by power generation windings 1303. The power generation unit.1301 can either be integrated with the fuel injection unit 1300 or provided as a separate unit, detachable and connectable to the unit 1300. The turbine rotor 1302 will be driven to rotate by a flow of air through the intake passage 120. The rotation of the turbine rotor 1302 will give rise to the generation of electrical current via the power generation windings 1303 and then this electrical power will be relayed to the unit 1300 to power the unit. In this way the implementation of fuel injection can be further simplified and the fuel injection unit becomes an even more direct replacement for a traditional carburettors, in that it does not need a power supply from the rest of the engine.

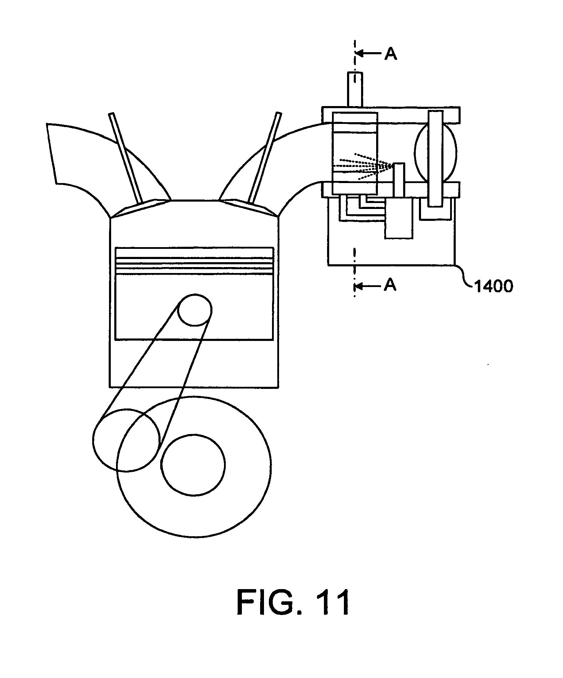

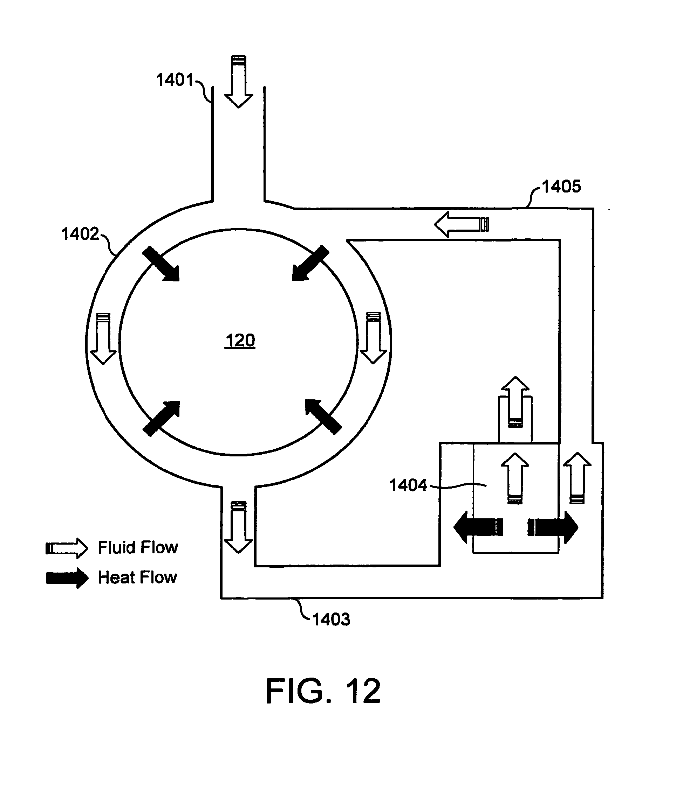

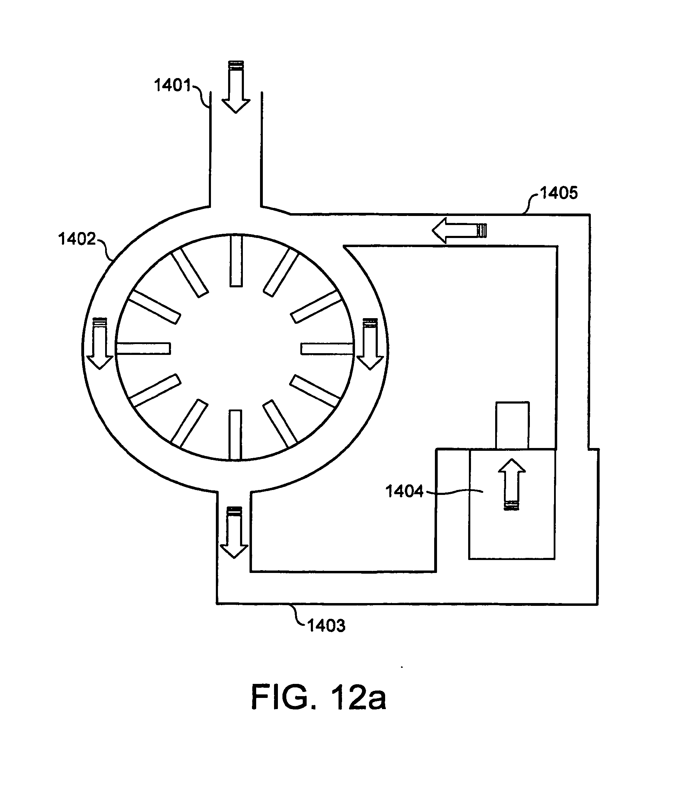

Figures 11, 12, 12a all illustrate the cooling arrangement which can be provided for any of the fuel injection units previously described. The fuel injection unit 1400 shown in the Figures does not show separately an electronic controller, pressure sensor, etc but only for reasons of simplicity of representation. It should be understood that the fuel injection unit 1400 could comprise any of the components which form part of the fuel injection units previously described.

Figure 11 shows how the fuel injection unit according to the invention could be cooled without the need for attaching the fuel injection unit to an existing cooling circuit of the engine. The Figure 11 arrangement proposes using "evaporative cooling" from fuel injected into the intake passage 120 as a way to cool fluid entering the fuel injector unit 1400.

All electronic fuel injectors and pumps with fuel injector systems put extra heat into the injected fuel. If too much heat is added to the fuel the fuel will vaporise and this will cause bubbles to form in the fluid which will cause problems with the pumps and injectors and lead to inadequate/inaccurate fuelling and possible engine damage. Conventional solutions comprise increasing pump capacity and flushing extra fuel around the fuel system to take heat back to the fuel tank. Alternatively, the pump pressure is increased to increase the vaporization temperature of the fuel allowing the fuel to remain liquid at high temperatures. Both solutions require extra pump capacity, either in terms of flow rate or in terms of pressure, thus adding to the cost and complexity of the engine or increasing further the heat put into the fuel.

In traditional carburettors it has been known that such devices suffer from "icing" during cold damp weather because the fuel atomised in the carburettor cools the intake air due to the fuel's latent heat of evaporation. This is a serious problem for a carburettor and many carburettor manufacturers have introduced heater water circuits, or-even electrical heating into the carburettor to solve the problem.

The arrangement of Figure 11 takes the two different problems known before for injectors and carburettors and combines them to its advantage by using the evaporation of the fuel as a way of cooling the fuel delivered to the fuel injection unit to remove unwanted heat from the fuel. The cooling by evaporation occurs before the fuel reaches the fuel injector so that the fuel injector always works with cold fuel to maximise efficiency using minimum energy. Additionally, the arrangement transfers unwanted heat to the atomised fuel inside the intake passage 120 which is advantageous as this helps with evaporation of the fuel in the intake passage 120 and hence the mixing of fuel and air.

Figure 12 is a section through the line A-A of Figure 11 taken in the direction of the arrows. Fuel supplied to the cooling circuit shown arrives at a fuel inlet 1401. The fuel then flows around the air intake passage 120 through an annular passage surrounding the air intake passage 120. Fuel is drawn from the annular passage 1402 via a passage 1403 to the injector 1404. Fuel is injected from the injector 1404 into the intake passage 120 (the Figure 12 representation is schematic to show the cooling circuit and does not show the actual position of the fuel injector, which will be upstream of the annular passage 1402 as shown in Figure 11). The fuel is delivered by the injector 1404 by evaporation and atomisation having a very strong chilling effect on the wall of the intake passage 120 and hence on the fuel in the annular passage 1402. Conversely, the heat of the fuel passing around the annular passage 1402 servers to warm the fuel in the intake passage 120 and helps evaporation and mixing of the fuel and air.

There is a return passage 1405 which returns fuel to the annular passage 1402. The annular passage 1402 and the passages 1403 and 1405 form a circuit in which fuel can flow to provide cooling. A natural flow of fuel will be set up by the temperature difference between fuel in the annular passage 1402 and fuel in the passage 1405 (which has removed heat from the injector 1404 and also from other components of the fuel injection unit). The circuit provides a thermosyphoning system that works without the need for any pump.

Figure 12a shows that the cooling effect on the fuel in the cooling circuit, (and conversely the heating effect on the fuel in the intake passage 120) can be improved by adding fins to the inside of the inlet passage 120 to increase the surface area of the intake passage 120 in the relevant region in order to improve heat transfer.

The cooling arrangement of Figures 12 and 12a improve injection efficiency by ensuring a good supply of cool fuel and improves vaporisation and air/fuel mixing and improves the combustion process (thereby reducing emissions) without any need for an additional power input.

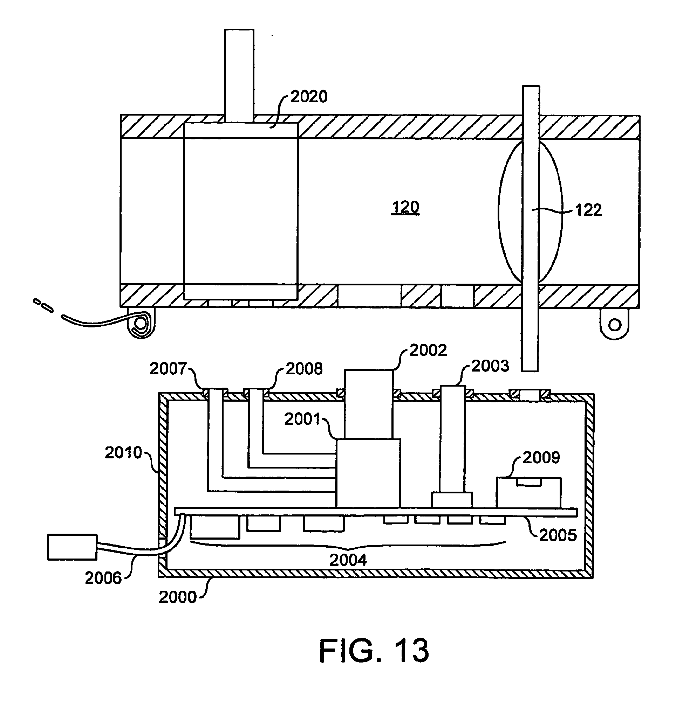

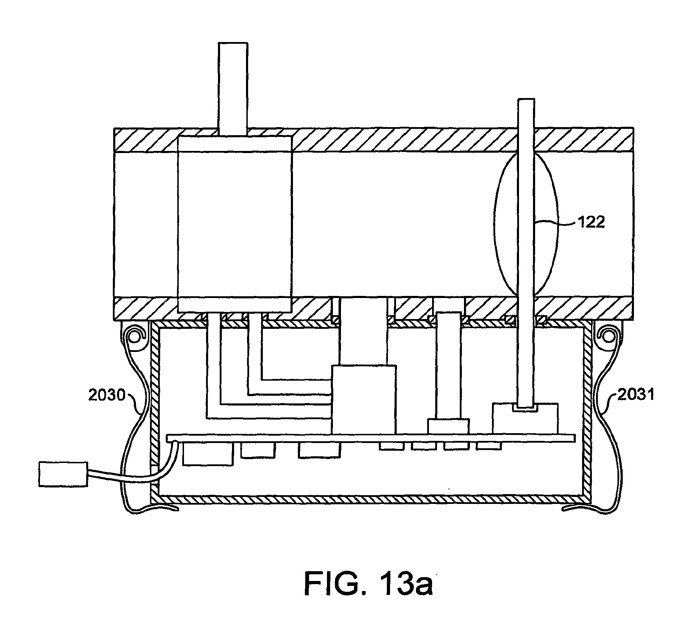

Figure 13 shows a further embodiment of the present invention. In the embodiment there is shown a fuel injection unit 2000 which comprises in a single integrated unit a fuel injector 2001, an atomiser unit 2002 (this could comprise an atomising nozzle and/or an electrostatic atomiser), a pressure sensor 2030 and an electronic controller 2004 provided on a circuit board 2005. A power cable 2006 enables the circuit board 2005 to be connected to the electrical power supply. Fuel inlets and outlets 2007 and 2008 are provided and also a throttle blade position sensor 2009. The unit is encased in a casting 2010.

In Figure 13 the fuel injection unit 2000 is shown detached from the air inlet passage 120 of an internal combustion engine. The air inlet passage 120 is provided with a throttle blade 122 and also an annular fuel passage 2020 is integrated into the air intake passage 120 (in the manner previously described in relation to Figures 12 and 12a).

Figure 13a shows that spring retaining clips 2030 and 2031 are used to retain in position the fuel injection unit 2000 when the fuel injection unit 2000 is attached to the air inlet passage 120 of the internal combustion engine. It can be seen that the fuel inlet 2007 and the fuel outlet 2008 have connected with the annular fuel passage 2020, that the fuel injector 2002 can now deliver fuel into the intake passage 120 and that the pressure sensor 2003 is operable to sense pressure in the air passage 120. Also, the central shaft of the throttle 120 now extends into the sensor 2009.

Figures 13 and 13a show that the fuel injection unit of the invention can be produced as a "partridge". The integrated fuel injection unit with all of the necessary sensors, fuel injector and the associated electronics is supplied as a single unit that can be clipped quickly to the throttle body of a small engine.

Many existing small engines fitted with carburettors are used by the public who have limited engineering skills. The engines often work in dirty, dusty or wet environments and have long periods of no use and need to be started by hand. These facts mean that the fuel system must be very robust and well sealed. If any problems occur with the fuel system (which is a common issue) the operators then have great difficulty replacing or servicing the carburettor. The same is true with a normal fuel injection system with its complex wiring, harness, many different sensors mounted around the engine and complex electronics. By configuring a single integrated fuel injection unit as a cartridge the present invention overcomes the problems described above, by combining all of the necessary features of the fuel injection unit into a single unit which can be well sealed from the environment and can be simply and easily replaced by an operator with little or no engineering skills. This solution overcomes the issues mentioned above and it can also ensure that the fuel system is maintained in good operational condition with the engine always operating to produce minimum emissions. With previous fuel systems both carburettors and fuel injection systems deteriorate with age and use and progressively produce worse emissions from the engine until the engine cannot run, whereupon the owner has to pay for professional service and replacement. Instead, the fuel injection system comes as a user-serviceable system and the user of the engine can easily buy a replacement cartridge to replace the fuel injection unit shown in Figures 13 and 13a. Thus, all that the user has to do is to unclip the existing unit and replace it with a new unit, simply clipped in place.

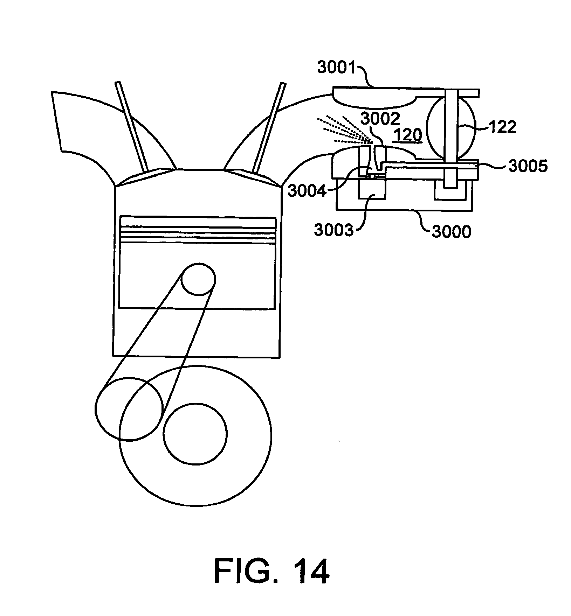

In all of the embodiments above the throttle body of the engine shown has been a simple standard throttle body. However, the applicant has realised that the fuel injection unit of the present invention can be advantageously used with a slightly more elaborate throttle body, as shown in Figure 14. The fuel injection unit 3000 shown in the Figure 14 will be a fuel injector unit of the type described and illustrated in previous figures. For this reason the operation will not be described now. The throttle body has been reconfigured to include a venturi 3001 and a nozzle 3002 which opens onto the throat of the venturi 3001. The fuel injector 3003 of the fuel injection unit 3000 delivers fuel into a mixing chamber 3004. An air bypass passage 3005 bypasses the throttle 122 and connects the mixing chamber 3004 to atmosphere.

In wide open throttle conditions the flow of air through the intake passage 120 will result in a depression in the throat of the venturi 3001 and this depression will then draw air from atmosphere through the air bypass passage 3005 into the mixing chamber 3004 where the airflow will entrain fuel and then the air and entrained fuel will be delivered into the air intake passage 120 via the nozzle 3002. In part-load conditions a depression will be generated downstream of the throttle blade 122 in operation of the engine and this depression will also function to draw air through the nozzle 3002, with fuel entrained in the air delivered.

Preferably the nozzle 3002 is a sonic nozzle or an-effervescent nozzle and this will aid atomisation of the fuel and increase the efficiency of the engine. The improved fuel atomisation in the intake passage 120 will improve the fuel/air mixing and hence improve the combustion process in the engine which will result in reduced emissions and reduced fuel consumption as well as easier starting in a small engine.

Carburettors use air motion in the intake passage to control the amount of fuel delivered and provide some degree of atomisation. Fuel injection systems of a traditional kind use the pressure of the fuel pump to deliver the fuel and the latest state-of-the-art injectors have increased fuel pressure in order to provide atomisation. In the present invention the fuel injector is used to deliver the fuel and control the fuel amount whilst the air motion through the bypass passage and through the nozzle is used to generate an atomisation effect. This allows each process to be fully optimised to achieve the maximum benefit with minimum energy.

In the arrangement, fuel accumulates in the mixing chamber when the intake valve 112 of the engine is closed and then the fuel is entrained in the air flow when the intake valve is open. This means that the well-atomised fuel spray is coincident with the intake valve being open so that the fuel delivered into the intake passage 120 is taken directly into the engine cylinder and not deposited on the wall of the intake passage 120. This timing effect also allows the remainder of the engine cycle for the metering of fuel into the mixing chamber thus allowing a lower pressure injector to be used without the problem that its inherent lack of atomisation causes difficulties with poorly atomised fuel. Well-atomised fuel is delivered at the best engine timing with minimum energy usage.

## Claims

1. A fuel injection unit (602, 702, 110, 1200, 1300, 1400, 2000, 3000) for an internal combustion engine comprising:
a pressure sensor (204, 2030) operable to detect a pressure of charge air;
an electronic controller (206, 2004) responsive to the pressure detected by the pressure sensor (204,2030), the controller (206, 2004) being operable to detect a change in the pressure detected by the pressure sensor (204, 2030) and to control the timing of the fuel delivery solely in dependence upon the time at which a pressure change is detected and to control an amount of fuel to be delivered in each engine cycle; and
a fuel injector (116, 2001) controlled by the electronic controller (206,2004), **characterised in that**:
the pressure sensor (204, 2004), the controller (206, 2004) and the fuel injector (116, 2001) are formed as a single integrated fuel injection unit in a casing so as to be attachable to a throttle body in an easily replaceable manner.

2. A fuel injection unit according to claim 1, in which the controller (206, 2004) controls the timing of the fuel injection in dependence upon the time between the occurrence of two detected pressure changes.

3. A fuel injection unit according to claim 1 or claim 2, in which the controller (206, 2004) comprises a high pass filter (402) operable to high pass filter a pressure signal representing the pressure detected by the pressure sensor (204, 2030), the controller (206,2004) detecting a change in the detected pressure in dependence on the high pass filtered pressure signal.

4. A fuel injection unit according to any one of the preceding claims, wherein:
the controller is operable to determine a load on the engine, the controller controlling in amount the fuel delivered in each engine cycle.in dependence on the load on the engine determined thereby.

5. A fuel injection unit according to any one of claims 1 to 4, in which the controller (206,2004) determines the load on the engine from the pressure detected by the pressure sensor (204,2030).

6. A fuel injection unit according to claim 5, in which the controller (206, 2004) uses an average value of a pressure signal representing the pressure detected by the pressure sensor (204, 2030) to determine the load on the engine.

7. A fuel injection unit according to claim 6 which comprises a low pass filter unit (400) operable to low pass filter the pressure signal, the controller (206, 2004) using the low pass filtered pressure signal to provide the average value of the pressure signal.

8. A fuel injection unit according to any one of claims 1 to 4, in which the controller (206, 2004) receives a load signal indicating an amount of charge air and determines the load on the engine in dependence on the received load signal.

9. A fuel injection unit according to claim 8, in which the load signal indicates a position of a throttle valve (122) of the engine.

10. A fuel injection unit according to any one the preceding claims, in which the controller (206, 2004) stores a table having information indicating an amount of fuel to be delivered per engine cycle for loads on the engine, the controller (206, 2004) using the table to control the amount of fuel delivered in an engine cycle.

11. A fuel injection unit as claimed in any of the preceding claims comprising additionally an oxygen sensor (1101) for sensing oxygen content in exhaust gas recycled for mixing with the charge air, the controller (206, 2004) controlling the amount of fuel delivered in an engine cycle having regard to the oxygen content detected by the oxygen sensor (1101).

12. A fuel injection unit as claimed in any one of the preceding claims comprising additionally a motor (1201) connectable to a/the throttle valve (122) of the engine and controlled by the controller (206,2004) whereby the controller can control throttle valve position.

13. A fuel injection unit (702, 110, 1200) as claimed in claim 1, comprising additionally:
a position sensor (704) for sensing position of a throttle valve 122), wherein:
the electronic controller 206) uses the throttle valve position detected by the position sensor (704) in determining the amount of fuel to be delivered in an engine cycle; and
the pressure sensor (204), the controller (206), the fuel injector (116) and the position sensor (704) are assembled together as the single integrated fuel injection unit (702, 110, 1200) in the casing so as to be attachable to a throttle body in an easily replaceable manner.

14. A fuel injection unit as claimed in claim 13 comprising additionally an oxygen sensor (1101) for sensing oxygen content in exhaust gas recycled for mixing with the charge air, the controller controlling the amount of fuel delivered in an engine cycle having regard to the oxygen content detected by the oxygen sensor (1101).

15. A fuel injection unit as claimed in any one of claims 13 to 14 comprising additionally a motor (1201) connectable to the throttle valve (122) and controlled by the controller whereby the controller can control position of the throttle valve (122).

16. A fuel injection unit (1100, 1200) for an internal combustion engine as claimed in claim 1, comprising additionally:
an oxygen sensor (1101) for sensing oxygen content in exhaust gas recycled for mixing with the charge air; wherein:
the electronic controller uses the pressure detected by the pressure sensor and the oxygen content detected by the oxygen sensor (1101); and
the pressure sensor, the controller, the fuel injector and the oxygen sensor (1101) are assembled together as the single integrated fuel injection unit (1100, 1200) in the casing so as to be attachable to a throttle body in an easily replaceable manner.

17. A fuel injection unit as claimed in claim 16 which is provided with an exhaust gas recirculation passage (1104) therethrough having a gas inlet connectable to receive exhaust gases from an exhaust system of the internal combustion engine and a gas outlet for delivering exhaust gas to an air intake passage (120) of the engine, the oxygen sensor (1101) being arranged to detect the oxygen content in the exhaust gas in the exhaust gas recirculation passage (1104).

18. A fuel injection unit as claimed in claim 17 comprising an exhaust gas flow control orifice (1106) for controlling rate of flow of exhaust gas through the exhaust gas recirculation passage (1104).

19. A fuel injection unit as claimed in any one of claims 16 to 18 wherein the controller controls in amount the fuel delivered in an engine cycle having regard to oxygen content indicated by the oxygen sensor (1104).

20. A fuel injection unit as claimed in any one of claims 16 to 19 comprising additionally a motor (1201) connectable to a throttle valve (122) and controlled by the controller whereby the controller can control position of the throttle valve (122).

21. A fuel injection unit (1200) for an internal combustion engine as claimed in claim 1, comprising additionally:
a motor (1201) connectable to a throttle valve (122) and controlled by the controller, whereby the controller can control throttle valve position; wherein:
the pressure sensor, the controller, the fuel injector and the motor (1201) are assembled together as the single integrated fuel injector unit (1200) in the casing so as to be attachable to a throttle body in an easily replaceable manner.

22. A fuel injection unit as claimed in claim 21 wherein the controller uses the pressure detected by the pressure sensor in determining an amount of fuel delivered to an engine cycle.

23. A fuel injection unit as claimed in claim 21 or claim 22 wherein the controller uses the pressure detected by the pressure sensor in determining throttle valve position.

24. An internal combustion engine having a fuel injection unit (602, 702, 1100, 1200, 1300, 1400) as claimed in any one of the preceding claims delivering fuel into charge air passing through an intake passage (120) into a combustion chamber (106) of the engine.

25. An internal combustion engine as claimed in claim 24 comprising a turbine (1302) in the intake passage (120) associated with an electrical power generator (1303) wherein flow of charge air through the intake passage causes the turbine (1302) to rotate with the turbine rotation being used by the electrical generator (1303) to generate electrical power and the electrical power generated being used by the fuel injection unit (1300).

26. An internal combustion engine as claimed in claim 24 or claim 25 wherein fuel is supplied to the fuel injection unit via a fuel supply passage (1401, 1402, 1403, 1405) which is associated with the intake passage (120) so that heat transfer can occur between fuel in the supply passage and charge air and fuel mixed therewith passing through the intake passage whereby evaporation of the fuel in the charge air is used to cool fuel in the fuel supply passage (1401, 1402, 1403, 1405).

27. An internal combustion engine as claimed in claim 26 wherein the air intake passage (120) and the fuel supply passage (1402) share a common dividing wall.

28. An internal combustion engine as claimed in claim 26 or claim 30 wherein the fuel supply passage comprises an annular section (1402) surrounding the air intake passage (120).

29. An internal combustion engine as claimed in any one of claims 26 to 28 wherein the fuel injection unit has a fuel flow circuit (1401, 1402, 1403, 1405) with an inlet (1403) to receive cool fuel from a first part (1402) of the fuel supply passage and an outlet (1405) to return warm fuel to a second part of the fuel supply passage.

30. An internal combustion engine as claimed in any one of claims 26 to 29 wherein the intake passage is provided with fins to aid heat transfer between the fuel supply passage and the charge air.

31. An internal combustion engine as claimed in any one of claims 24 to 30 wherein the fuel injection unit (3000) injects fuel into a mixing chamber (3004) in which the fuel is entrained in gas flowing into the mixing chamber (3004) from a bypass passage (3005) and the entrained fuel and gas flow via a nozzle (3002) into a throat of a venturi (3001) provided in the air intake passage (120).

32. An internal combustion engine as claimed in claim 31 wherein the bypass passage (3005) is connected to atmosphere.

33. An internal combustion engine as claimed in claim 31 wherein the bypass passage (3005) receives recirculated exhaust gas.

34. An internal combustion engine as claimed in any one of claims 31 to 33 wherein the nozzle (3002) is a sonic nozzle.

35. An internal combustion engine as claimed in any one of claims 24 to 34 wherein the fuel injection unit (2000) is removably attached to an exterior surface of the intake passage by user-operable attachment means (2030, 2031).

36. An internal combustion engine as claimed in claim 35 wherein the attachment means comprises clips (2030, 2031).

37. A method of use of an internal combustion engine as claimed in claim 35 or claim 36 comprising repair or servicing of the fuel injection system of the engine by a user detaching an existing fuel injection unit (2000) and then attaching a new fuel injection unit (2000) using the user-operable attachment means (2030, 2031).

38. An engine powered device comprising an internal combustion engine as claimed in any one of claims 24 to 36.

39. A device according to claim 38, in which the device is a gardening device.

40. A device according to claim 39, in which the device is selected from the list comprising:
a lawn mower;
a hedge trimmer;
a chain saw;
a rotovator;
a lawn aerator;
a scarifier; and
a shredder.

41. A device according to claim 38, in which the device is an engine driven vehicle.

## Patentansprüche

1. Brennstoffeinspritzeinheit (602, 702, 110, 1200, 1300, 1400, 2000, 3000) für einen Innenverbrennungsmotor, umfassend:
einen Drucksensor (204, 2030), der betreibbar ist, um einen Ladeluft-Druck zu erfassen;
eine elektronische Steuerung/Regelung (206, 2004), die auf den von dem Drucksensor (204, 2030) erfassten Druck reagiert, wobei die elektronische Steuerung/Regelung (206, 2004) betreibbar ist, um eine Veränderung in dem von dem Drucksensor (204, 2030) erfassten Druck zu erfassen und
die Zeitabstimmung der Brennstoffeinspeisung allein in Abhängigkeit von dem Zeitpunkt zu steuern/regeln, zu dem die Druckveränderung erfasst wird, und um eine in jedem Motorzyklus einzuspeisende Brennstoffmenge zu steuern/regeln; und
einen von der elektronischen Steuerung/Regelung (206, 2004) gesteuerten/geregelten Brennstoffeinspritzer (116, 2001), **dadurch gekennzeichnet, dass**:
der Drucksensor (204, 2004), die Steuerung/Regelung (206, 2004) und der Brennstoffeinspritzer (116, 2001) derart als eine einzelne, integrierte Brennstoffeinspritzeinheit in einem Gehäuse gebildet sind, dass diese an einem Drosselklappenstutzen auf leicht ersetzbare Weise befestigt werden kann.

2. Brennstoffeinspritzeinheit nach Anspruch 1, bei welcher die Steuerung/Regelung (206, 2004) die Zeitabstimmung der Brennstoffeinspritzung abhängig von der Zeitdauer zwischen dem Auftreten zweier erfasster Druckveränderungen steuert/regelt.

3. Brennstoffeinspritzeinheit nach Anspruch 1 oder Anspruch 2, wobei die Steuerung/Regelung (206, 2004) einen Hochpassfilter (402) umfasst, der betreibbar ist, um ein Drucksignal, das den von dem Drucksensor (204, 2030) erfassten Druck repräsentiert, zu hochpassfiltern, wobei die Steuerung/Regelung (206, 2004) eine Veränderung in dem erfassten Druck in Abhängigkeit von dem hochpassgefilterten Drucksignal erfasst.

4. Brennstoffeinspritzeinheit nach einem der vorangegangenen Ansprüche, wobei:
die Steuerung/Regelung betreibbar ist, um eine Last am Motor zu bestimmen, wobei die Steuerung/Regelung die Menge des in jedem Motorzyklus eingespeisten Brennstoffs in Abhängigkeit von der **dadurch** bestimmten Last am Motor steuert/regelt.

5. Brennstoffeinspritzeinheit nach einem der Ansprüche 1 bis 4, wobei die Steuerung/Regelung (206, 2004) die Last am Motor anhand des von dem Drucksensor (204, 2030) erfassten Drucks bestimmt.

6. Brennstoffeinspritzeinheit nach Anspruch 5, wobei die Steuerung/Regelung (206, 2004) einen Durchschnittswert eines Drucksignals verwendet, das den von dem Drucksensor (204, 2030) erfassten Druck repräsentiert, um die Last am Motor zu bestimmen.

7. Brennstoffeinspritzeinheit nach Anspruch 6, welche eine Tiefpassfiltereinheit (400) umfasst, die betreibbar ist, um das Drucksignal zu tiefpassfiltern, wobei die Steuerung/Regelung (206, 2004) das tiefpassgefilterte Drucksignal verwendet, um den Durchschnittswert des Drucksignals vorzusehen.

8. Brennstoffeinspritzeinheit nach einem der Ansprüche 1 bis 4, wobei die Steuerung/Regelung (206, 2004) ein Lastsignal empfängt, welches eine Menge der Ladeluft anzeigt, und die Last am Motor in Abhängigkeit von dem empfangenen Lastsignal bestimmt.

9. Brennstoffeinspritzeinheit nach Anspruch 8, wobei das Lastsignal eine Stellung einer Drosselklappe (122) des Motors anzeigt.

10. Brennstoffeinspritzeinheit nach einem der vorangegangenen Ansprüche, wobei die Steuerung/Regelung (206, 2004) eine Tabelle mit Informationen speichert, die einen pro Motorzyklus für Lasten am Motor einzuspritzende Brennstoffmenge anzeigen, wobei die Steuerung/Regelung (206, 2004) die Tabelle nutzt, um die in einem Motorzyklus eingespeiste Brennstoffmenge zu steuern/regeln.

11. Brennstoffeinspritzeinheit nach einem der vorangegangenen Ansprüche, welche ferner einen Sauerstoffsensor (1101) zum Erfassen des Sauerstoffgehalts in zum Mischen mit der Ladeluft wiederaufbereitetem Abgas umfasst, wobei die Steuerung/Regelung (206, 2004) die in einem Motorzyklus eingespeiste Brennstoffmenge unter Berücksichtigung des von dem Sauerstoffsensor (1101) erfassten Sauerstoffgehalts steuert/regelt.

12. Brennstoffeinspritzeinheit nach einem der vorangegangenen Ansprüche, welche ferner einen Motor (1201) umfasst, der mit einer/der Drosselklappe (122) des Motors verbindbar ist und von der Steuerung/Regelung (206, 2004) gesteuert/geregelt wird, wodurch die Steuerung/Regelung die Drosselklappenstellung steuern/regeln kann.

13. Brennstoffeinspritzeinheit (702, 110, 1200) nach Anspruch 1, welche ferner umfasst:
einen Stellungssensor (704) zum Erfassen der Stellung einer Drosselklappe (122), wobei:
die elektronische Steuerung/Regelung (206) die von dem Stellungssensor (704) erfasste Drosselklappenstellung zum Bestimmen der in einem Motorzyklus einzuspeisenden Brennstoffmenge nutzt, und
wobei der Drucksensor (204), die Steuerung/Regelung (206), der Brennstoffeinspritzer (116) und der Stellungssensor (704) als die einzelne, integrierte Brennstoffeinspritzeinheit (702, 110, 1200) in dem Gehäuse zusammengebaut sind, so dass diese auf leicht ersetzbare Weise an einem Drosselklappenstutzen befestigt werden kann.

14. Brennstoffeinspritzeinheit nach Anspruch 13, welche ferner einen Sauerstoffsensor (1101) zum Erfassen des Sauerstoffgehalts in zum Mischen mit der Ladeluft wiederaufbereitetem Abgas umfasst, wobei die Steuerung/Regelung die in einem Motorzyklus eingespeiste Brennstoffmenge unter Berücksichtigung des von dem Sauerstoffsensor (1101) erfassten Sauerstoffgehalts steuert/regelt.

15. Brennstoffeinspritzeinheit nach einem der Ansprüche 13 bis 14, welche ferner einen Motor (1201) umfasst, der mit der Drosselklappe (122) verbindbar ist und von der Steuerung/Regelung gesteuert/geregelt wird, wodurch die Steuerung/Regelung die Stellung der Drosselklappe (122) steuern/regeln kann.

16. Brennstoffeinspritzeinheit (1100, 1200) für einen Innenverbrennungsmotor nach Anspruch 1, ferner umfassend:
einen Sauerstoffsensor (1101) zum Erfassen des Sauerstoffgehalts in zum Mischen mit der Ladeluft wiederaufbereitetem Abgas;
wobei:
die elektronische Steuerung/Regelung den von dem Drucksensor erfassten Druck und den von dem Sauerstoffsensor (1101) erfassten Sauerstoffgehalt nutzt; und
der Drucksensor, die Steuerung/Regelung, der Brennstoffeinspritzer und der Sauerstoffsensor (1101) zusammen als die einzelne, integrierte Brennstoffeinspritzeinheit (1100, 1200) in dem Gehäuse gebildet sind, so dass diese an einem Drosselklappenstutzen auf leicht ersetzbare Weise befestigt werden kann.

17. Brennstoffeinspritzeinheit nach Anspruch 16, welche mit einer hindurch führenden Abgas-Rückführungsleitung (1104) versehen ist, umfassend einen Gaseinlass, der verbindbar ist, um Abgase von einem Abgassystem des Innenverbrennungsmotors aufzunehmen, und einen Gasauslass zum Einspeisen von Abgas in eine Luftaufnahmeleitung (120) des Motors, wobei der Sauerstoffsensor (1101) dazu ausgebildet ist, den Sauerstoffgehalt in dem Abgas in der Abgas-Rückführungsleitung (1104) zu erfassen.

18. Brennstoffeinspritzeinheit nach Anspruch 17, umfassend eine Abgas-Strömungssteuerungsöffnung (1106) zum Steuern/Regeln der Strömungsgeschwindigkeit des Abgases durch die Abgas-Rückführungsleitung (1104).

19. Brennstoffeinspritzeinheit nach einem der Ansprüche 16 bis 18, wobei die Steuerung/Regelung die in einem Motorzyklus eingespeiste Brennstoffmenge unter Berücksichtigung des von dem Sauerstoffsensor (1104) angezeigten Sauerstoffgehalts steuert/regelt.

20. Brennstoffeinspritzeinheit nach einem der Ansprüche 16 bis 19, welche ferner einen Motor (1201) umfasst, der mit einer Drosselklappe (122) verbindbar ist und von der Steuerung/Regelung gesteuert/geregelt wird, wodurch die Steuerung/Regelung die Stellung der Drosselklappe (122) steuern/regeln kann.

21. Brennstoffeinspritzeinheit (1200) für einen Innenverbrennungsmotor nach Anspruch 1, ferner umfassend:
einen Motor (1201), der mit einer Drosselklappe (122) verbindbar ist und von der Steuerung/Regelung gesteuert/geregelt wird, wodurch die Steuerung/Regelung die Stellung der Drosselklappe steuern/regeln kann;
wobei:
der Drucksensor, die Steuerung/Regelung, der Brennstoffeinspritzer und der Motor (1201) derart als eine einzelne, integrierte Brennstoffeinspritzeinheit (1200) in dem Gehäuse gebildet sind, dass diese an einem Drosselklappenstutzen auf leicht ersetzbare Weise befestigt werden kann.

22. Brennstoffeinspritzeinheit nach Anspruch 21, wobei die Steuerung/Regelung den von dem Drucksensor erfassten Druck zum Bestimmen einer in einem Motorzyklus eingespeisten Brennstoffmenge nutzt.

23. Brennstoffeinspritzeinheit nach Anspruch 21 oder Anspruch 22, wobei die Steuerung/Regelung den von dem Drucksensor erfassten Druck zum Bestimmen der Drosselklappenstellung nutzt.

24. Innenverbrennungsmotor mit einer Brennstoffeinspritzeinheit (602, 702, 1100, 1200, 1300, 1400) nach einem der vorangehenden Ansprüche, welche Brennstoff in Ladeluft einspeist, die durch eine Einlassleitung (120) in eine Verbrennungskammer (106) des Motors gelangt.

25. Innenverbrennungsmotor nach Anspruch 24, umfassend eine Turbine (1302) in der Einlassleitung (120), verbunden mit einem elektrischen Stromerzeuger (1303), wobei das Strömen von Ladeluft durch die Einlassleitung bewirkt, dass sich die Turbine (1302) dreht, wobei die Turbinendrehung von dem Stromerzeuger (1303) dazu genutzt wird, elektrischen Strom zu erzeugen, und wobei der erzeugte elektrische Strom von der Brennstoffeinspritzeinheit (1300) genutzt wird.

26. Innenverbrennungsmotor nach Anspruch 24 oder 25, wobei der Brennstoffeinspritzeinheit Brennstoff über eine Brennstoffzuführleitung (1401, 1402, 1403, 1405) zugeführt wird, welche mit der Einlassleitung (120) verbunden ist, so dass eine Wärmeübertragung zwischen Brennstoff in der Zuführleitung und durch die Einlassleitung gelangender Ladeluft und damit gemischtem Brennstoff erfolgen kann, wodurch das Verdampfen von Brennstoff in der Ladeluft genutzt wird, um Brennstoff in der Brennstoffzuführleitung (1401, 1402, 1403, 1405) zu kühlen.

27. Innenverbrennungsmotor nach Anspruch 26, wobei die Lufteinlassleitung (120) und die Brennstofzuführleitung (1402) eine gemeinsame Trennwand teilen.

28. Innenverbrennungsmotor nach Anspruch 26 oder Anspruch 30, wobei die Brennstoffzuführleitung einen die Lufteinlassleitung (120) umgebenden ringförmigen Abschnitt (1402) umfasst.

29. Innenverbrennungsmotor nach einem der Ansprüche 26 bis 28, wobei die Brennstoffeinspritzeinheit einen Brennstoffströmungskreislauf (1401, 1402, 1403, 1405) mit einem Einlass (1403) zum Aufnehmen von kaltem Brennstoff aus einem ersten Teil (1402) der Brennstoffzuführleitung und einen Auslass (1405) zum Rückführen von warmem Brennstoff zu einem zweiten Teil der Brennstoffzuführleitung umfasst.

30. Innenverbrennungsmotor nach einem der Ansprüche 26 bis 29, wobei die Einlassleitung mit Lamellen versehen ist, um die Wärmeübertragung zwischen der Brennstoffzuführleitung und der Ladeluft zu fördern.

31. Innenverbrennungsmotor nach einem der Ansprüche 24 bis 30, wobei die Brennstoffeinspritzeinheit (3000) Brennstoff in eine Mischkammer (3004) einspritzt, in der der Brennstoff in Gas mitgeführt ist, das aus einer Überbrückungsleitung (3005) in die Mischkammer (3004) fließt, und wobei der mitgeführte Brennstoff und das Gas über eine Düse (3002) in den Hals einer in der Lufteinlassleitung (120) vorgesehenen Venturidüse (3001) fließen.

32. Innenverbrennungsmotor nach Anspruch 31, wobei die Überbrückungsleitung (3005) mit der Umgebungsluft verbunden ist.

33. Innenverbrennungsmotor nach Anspruch 31, wobei die Überbrückungsleitung (3005) rückgeführtes Abgas aufnimmt.

34. Innenverbrennungsmotor nach einem der Ansprüche 31 bis 33, wobei die Düse (3002) eine Schalldüse ist.

35. Innenverbrennungsmotor nach einem der Ansprüche 24 bis 34, wobei die Brennstoffeinspritzeinheit (2000) mittels benutzerbedienbarer Befestigungsmittel (2030, 2031) entfernbar an einer Außenfläche der Einlassleitung befestigt ist.

36. Innenverbrennungsmotor nach Anspruch 35, wobei das Befestigungsmittel Clips (2030, 2031) umfasst.

37. Verfahren zur Verwendung eines Innenverbrennungsmotors nach Anspruch 35 oder Anspruch 36, umfassend die Reparatur oder Wartung eines Brennstoffeinspritzsystems des Motors durch einen Benutzer, der eine existierende Brennstoffeinspritzeinheit (2000) löst und dann unter Verwendung der benutzerbedienbaren Befestigungsmittel (2030, 2031) eine neue Brennstoffeinspritzeinheit (2000) befestigt.

38. Motorengetriebene Vorrichtung, umfassend einen Innenverbrennungsmotor nach einem der Ansprüche 24 bis 36.

39. Vorrichtung nach Anspruch 38, wobei die Vorrichtung ein Gartengerät ist.

40. Vorrichtung nach Anspruch 39, wobei die Vorrichtung aus der folgenden Liste gewählt ist:
Rasenmäher;
Heckenschere;
Kettensäge;
Gartenfräse;
Rasenlüfter;
Vertikutierer; und
Schredder.

41. Vorrichtung nach Anspruch 38, wobei die Vorrichtung ein motorgetriebenes Fahrzeug ist.

## Revendications

1. Unité d'injection de carburant (602, 702, 110, 1200, 1300, 1400, 2000, 3000) pour un moteur à combustion interne comprenant :
un capteur de pression (204, 2030) pouvant fonctionner pour détecter une pression de l'air de suralimentation ;
une unité de commande électronique (206, 2004) sensible à la pression détectée par le capteur de pression (204, 2030), l'unité de commande (206, 2004) pouvant fonctionner pour détecter un changement au niveau de la pression détectée par le capteur de pression (204, 2030) et pour commander le calage de la distribution de carburant uniquement en fonction du temps auquel un changement de pression est détecté et pour commander une quantité de carburant à distribuer dans chaque cycle du moteur ; et
un injecteur de carburant (116, 2001) commandé par l'unité de commande électronique (206, 2004), **caractérisée en ce que** :
le capteur de pression (204, 2004), l'unité de commande (206, 2004) et l'injecteur de carburant (116, 2001) sont formés comme une unité d'injection de carburant monobloc intégrée dans un boîtier de façon à pouvoir la fixer à un corps de papillon des gaz de manière facilement remplaçable.

2. Unité d'injection de carburant selon la revendication 1, dans laquelle l'unité de commande (206, 2004) commande le calage de l'injection de carburant en fonction du temps entre l'occurrence de deux changements de pression détectés.

3. Unité d'injection de carburant selon la revendication 1 ou 2, dans laquelle l'unité de commande (206, 2004) comprend un filtre passe-haut (402) pouvant fonctionner pour le filtrage passe-haut d'un signal de pression représentant la pression détectée par le capteur de pression (204, 2030), l'unité de commande (206, 2004) détectant un changement au niveau de la pression détectée en fonction du signal de pression ayant subi le filtrage passe-haut.

4. Unité d'injection de carburant selon l'une quelconque des revendications précédentes, dans laquelle :
l'unité de commande peut fonctionner pour déterminer une charge sur le moteur, l'unité de commande commandant la quantité du carburant distribuée dans chaque cycle du moteur en fonction de la charge sur le moteur ainsi déterminée.

5. Unité d'injection de carburant selon l'une quelconque des revendications 1 à 4, dans laquelle l'unité de commande (206, 2004) détermine la charge sur le moteur d'après la pression détectée par le capteur de pression (204, 2030).

6. Unité d'injection de carburant selon la revendication 5, dans laquelle l'unité de commande (206, 2004) utilise une valeur moyenne d'un signal de pression représentant la pression détectée par le capteur de pression (204, 2030) pour déterminer la charge sur le moteur.

7. Unité d'injection de carburant selon la revendication 6 qui comprend une unité (400) de filtre passe-bas pouvant fonctionner pour le filtrage passe-bas du signal de pression, l'unité de commande (206, 2004) utilisant le signal de pression ayant subi le filtrage passe-bas pour fournir la valeur moyenne du signal de pression.

8. Unité d'injection de carburant selon l'une quelconque des revendications 1 à 4, dans laquelle l'unité de commande (206, 2004) reçoit un signal de charge indiquant une quantité d'air de suralimentation et détermine la charge sur le moteur en fonction du signal de charge reçu.

9. Unité d'injection de carburant selon la revendication 8, dans laquelle le signal de charge indique une position d'un papillon des gaz (122) du moteur.

10. Unité d'injection de carburant selon l'une quelconque des revendications précédentes, dans laquelle l'unité de commande (206, 2004) stocke une table ayant des informations indiquant une quantité de carburant à distribuer par cycle du moteur pour des charges sur le moteur, l'unité de commande (206, 2004) utilisant la table pour commander la quantité de carburant distribuée dans un cycle du moteur.

11. Unité d'injection de carburant selon l'une des revendications précédentes comprenant en plus un capteur d'oxygène (1101) pour détecter la teneur en oxygène dans les gaz d'échappement recyclés à mélanger avec l'air de suralimentation, l'unité de commande (206, 2004) commandant la quantité de carburant distribuée dans un cycle du moteur à la lumière de la teneur en oxygène détectée par le capteur d'oxygène (1101).

12. Unité d'injection de carburant selon l'une quelconque des revendications précédentes comprenant en plus un moteur (1201) pouvant être relié à un/au papillon des gaz (122) du moteur et commandé par l'unité de commande (206, 2004) moyennant quoi l'unité de commande peut commander la position du papillon des gaz.

13. Unité d'injection de carburant (702, 110, 1200) selon la revendication 1, comprenant en plus :
un capteur de position (704) pour détecter la position d'un papillon des gaz (122), où :
l'unité de commande électronique (206) utilise la position du papillon des gaz détectée par le capteur de position (704) pour déterminer la quantité de carburant à distribuer dans un cycle du moteur ; et
le capteur de pression (204), l'unité de commande (206), l'injecteur de carburant (116) et le capteur de position (704) sont assemblés pour former l'unité d'injection de carburant monobloc (702, 110, 1200) intégrée dans le boîtier de façon à pouvoir la fixer à un corps du papillon des gaz de manière facilement remplaçable.

14. Unité d'injection de carburant selon la revendication 13 comprenant en plus un capteur d'oxygène (1101) pour détecter la teneur en oxygène dans les gaz d'échappement recyclés à mélanger avec l'air de suralimentation, l'unité de commande commandant la quantité de carburant distribuée dans un cycle du moteur à la lumière de la teneur en oxygène détectée par le capteur d'oxygène (1101).

15. Unité d'injection de carburant selon l'une quelconque des revendications 13 à 14 comprenant en plus un moteur (1201) pouvant être relié au papillon des gaz (122) et commandé par l'unité de commande moyennant quoi l'unité de commande peut commander la position du papillon des gaz (122).

16. Unité d'injection de carburant (1100, 1200) pour un moteur à combustion interne selon la revendication 1, comprenant en plus :
un capteur d'oxygène (1101) pour détecter la teneur en oxygène dans les gaz d'échappement recyclés à mélanger avec l'air de suralimentation ; où :
l'unité de commande électronique utilise la pression détectée par le capteur de pression et la teneur en oxygène détectée par le capteur d'oxygène (1101) ; et
le capteur de pression, l'unité de commande, l'injecteur de carburant et le capteur d'oxygène (1101) sont assemblées pour former l'unité d'injection de carburant monobloc (1100, 1200) intégrée dans le boîtier de façon à pouvoir la fixer à un corps du papillon des gaz de manière facilement remplaçable.

17. Unité d'injection de carburant selon la revendication 16 à travers laquelle est prévu un passage de recirculation des gaz d'échappement (1104) ayant une entrée de gaz pouvant être connectée pour recevoir des gaz d'échappement d'un système d'échappement du moteur à combustion interne et une sortie de gaz pour distribuer les gaz d'échappement à un passage (120) d'admission d'air du moteur, le capteur d'oxygène (1101) étant agencé pour détecter la teneur en oxygène dans les gaz d'échappement dans le passage de recirculation des gaz d'échappement (1104).

18. Unité d'injection de carburant selon la revendication 17 comprenant un orifice (1106) de commande d'écoulement des gaz d'échappement pour commander le débit d'écoulement des gaz d'échappement à travers le passage de recirculation des gaz d'échappement (1104).

19. Unité d'injection de carburant selon l'une quelconque des revendications 16 à 18 dans laquelle l'unité de commande commande la quantité de carburant distribuée dans un cycle du moteur à la lumière de la teneur en oxygène indiquée par le capteur d'oxygène (1104).

20. Unité d'injection de carburant selon l'une quelconque des revendications 16 à 19 comprenant en plus un moteur (1201) pouvant être relié à un papillon des gaz (122) et commandé par l'unité de commande moyennant quoi l'unité de commande peut commander la position du papillon des gaz (122).

21. Unité d'injection de carburant (1200) pour un moteur à combustion interne selon la revendication 1, comprenant en plus :
un moteur (1201) pouvant être relié à un papillon des gaz (122) et commandé par l'unité de commande, moyennant quoi l'unité de commande peut commander la position du papillon des gaz ; où :
le capteur de pression, l'unité de commande, l'injecteur de carburant et le moteur (1201) sont assemblés pour former l'unité d'injection de carburant monobloc (1200) intégrée dans le boîtier de façon à pouvoir la fixer à un corps du papillon des gaz de manière facilement remplaçable.

22. Unité d'injection de carburant selon la revendication 21 dans laquelle l'unité de commande utilise la pression détectée par le capteur de pression pour
déterminer une quantité du carburant distribuée à un cycle du moteur.

23. Unité d'injection de carburant selon la revendication 21 ou la revendication 22 dans laquelle l'unité de commande utilise la pression détectée par le capteur de pression pour déterminer une position du papillon des gaz.

24. Moteur à combustion interne ayant une unité d'injection de carburant (602, 702, 1100, 1200, 1300, 1400) selon l'une quelconque des revendications précédentes distribuant du carburant dans de l'air de suralimentation passant à travers un passage d'admission (120) dans une chambre de combustion (106) du moteur.

25. Moteur à combustion interne selon la revendication 24 comprenant une turbine (1302) dans le passage d'admission (120) associée à un générateur (1303) de puissance électrique où l'écoulement d'air de suralimentation à travers le passage d'admission amène la turbine (1302) à se mettre en rotation, la rotation de la turbine étant utilisée par le générateur électrique (1303) pour générer de la puissance électrique et la puissance électrique générée étant utilisée par l'unité d'injection de carburant (1300).

26. Moteur à combustion interne selon la revendication 24 ou 25 dans lequel du carburant est alimenté à l'unité d'injection de carburant à travers un passage d'alimentation en carburant (1401, 1402, 1403, 1405) qui est associé au passage d'admission (120) de sorte qu'un transfert de chaleur se produise entre le carburant dans le passage d'alimentation et l'air de suralimentation et le carburant mélangé avec ce dernier passant à travers le passage d'admission moyennant quoi l'évaporation du carburant dans l'air de suralimentation est utilisée pour refroidir le carburant dans le passage d'alimentation en carburant (1401, 1402, 1403, 1405).

27. Moteur à combustion interne selon la revendication 26 dans lequel le passage (120) d'admission d'air et le passage (1402) d'alimentation en carburant partagent une paroi de séparation commune.

28. Moteur à combustion interne selon la revendication 26 ou 30 dans lequel le passage d'alimentation en carburant comprend une section annulaire (1402) entourant le passage (120) d'admission d'air.

29. Moteur à combustion interne selon l'une quelconque des revendications 26 à 28 dans lequel l'unité d'injection de carburant a un circuit (1401, 1402, 1403, 1405) d'écoulement de carburant avec une entrée (1403) pour recevoir du carburant froid d'une première partie (1402) du passage d'alimentation en carburant et une sortie (1405) pour renvoyer du carburant chaud à une deuxième partie du passage d'alimentation en carburant.

30. Moteur à combustion interne selon l'une quelconque des revendications 26 à 29 dans lequel le passage d'admission est doté d'ailettes pour aider au transfert de chaleur entre le passage d'alimentation en carburant et l'air de suralimentation.

31. Moteur à combustion interne selon l'une quelconque des revendications 24 à 30 dans lequel l'unité d'injection de carburant (3000) injecte du carburant dans une chambre de mélange (3004) dans laquelle le carburant est entraîné dans un gaz s'écoulant dans la chambre de mélange (3004) depuis un passage de contournement (3005) et le carburant et le gaz entraînés s'écoulent à travers une buse (3002) dans une gorge d'un venturi (3001) pourvu dans le passage (120) d'admission d'air.

32. Moteur à combustion interne selon la revendication 31 dans lequel le passage de contournement (3005) est mis à l'air libre.

33. Moteur à combustion interne selon la revendication 31 dans lequel le passage de contournement (3005) reçoit les gaz d'échappement recirculés.

34. Moteur à combustion interne selon l'une quelconque des revendications 31 à 33 dans lequel la buse (3002) est une buse sonique.

35. Moteur à combustion interne selon l'une quelconque des revendications 24 à 34 dans lequel l'unité d'injection de carburant (2000) est fixée de manière amovible à une surface extérieure du passage d'admission par un moyen de fixation (2030, 2031) pouvant être manipulé par un utilisateur.

36. Moteur à combustion interne selon la revendication 35 dans lequel le moyen de fixation comprend des éléments d'attache (2030, 2031).

37. Procédé d'utilisation d'un moteur à combustion interne selon la revendication 35 ou 36 comprenant la réparation ou l'entretien du système d'injection de carburant du moteur selon lequel un utilisateur détache une unité d'injection de carburant existante (2000) et installe ensuite une nouvelle unité d'injection de carburant (2000) en utilisant le moyen de fixation (2030, 2031) pouvant être manipulé par un utilisateur.

38. Dispositif alimenté par un moteur comprenant un moteur à combustion interne selon l'une quelconque des revendications 24 à 36.

39. Dispositif selon la revendication 38, dans lequel le dispositif est un dispositif de jardinage.

40. Dispositif selon la revendication 39, dans lequel le dispositif est sélectionné de la liste comprenant :
une tondeuse à gazon ;
un taille-haie ;
une scie à chaîne ;
un motoculteur ;
un aérateur de pelouse ;
une déchaumeuse ; et
un broyeur.

41. Dispositif selon la revendication 38, dans lequel le dispositif est un véhicule entraîné par un moteur.
